# EUROPEAN PATENT APPLICATION

(11) **EP 1 760 582 A2**
(43) Date of publication of application: **07.03.2007**
(21) Application number: 06119684.6
(22) Date of filing: 29.08.2006
(51) Int. Cl.: G06F 9/44

(54) **Help-guidance display method and apparatus, information processing apparatus, printing kiosk apparatus, and program**

(30) Priority: 30.08.2005 JP 2005248549
(71) Applicant: SONY CORPORATION, Tokyo (JP)
(72) Inventor: Shigenobu, Ohga, Shinagawa-ku Tokyo (JP); Koichi, Sawada, Shinagawa-ku Tokyo (JP); Toshiyuki, Nagasawa, Shinagawa-ku Tokyo (JP); Hirotaka, Kano, Shinagawa-ku Tokyo (JP)
(74) Representative: Thévenet, Jean-Bruno

(57) **Abstract**

A help-guidance display method includes the steps of performing semi-transparent display processing on an operation screen when displaying help guidance in association with the operation screen or an operation key; and displaying the help guidance so that the help guidance overlies the operation screen subjected to the semi-transparent display processing.

## Description

### CROSS REFERENCES TO RELATED APPLICATIONS

The present invention contains subject matter related to Japanese Patent Application JP 2005-248549 filed in the Japanese Patent Office on August 30, 2005, the entire contents of which are incorporated herein by reference.

### BACKGROUND OF THE INVENTION

### 1. Field of the Invention

The present invention relates to help-guidance display techniques including apparatuses for personal use and reception apparatuses and printing kiosk apparatuses for business use.

More specifically, the present invention relates to a help-guidance display method and apparatus, an information processing apparatus, a printing kiosk apparatus, and a program.

### 2. Description of the Related Art

A graphical user interface (GUI) is a user interface that allows a user to select or specify an item on a display screen to easily control operations of a device. GUIs are used in many electronic apparatuses.

Recent electronic apparatuses are designed so as to satisfy various demands. For example, the number of function buttons and operation keys constituting GUIs has tended to increase.

Recent electronic apparatuses have various help-guidance functions, such as pointer indication, help-key selection, pop-up display, guidance speech, and buttons for finding help information. An apparatus supporting a help function is disclosed in Japanese Unexamined Patent Application Publication No. 4-160527.

### SUMMARY OF THE INVENTION

Recently, due to the different operating methods used in different applications, the multilayered help information, etc., the complexity of the help-guidance functions has progressively increased.

The correspondence between operation keys and help-guides has also become complicated.

It is therefore difficult for users to make full use of the help-guidance functions if they are unfamiliar with the operation key types or operation key search.

In view of the foregoing technical problems, the present inventors propose a help-guidance display technique having the following processing functions:
(a) a semi-transparent processing function to perform semi-transparent display processing on an operation screen when presenting help guidance in association with the operation screen or an operation key; and
(b) a combining function to display the help guidance so that the help guidance overlies the operation screen subjected to the semi-transparent display processing.

According to a display technique according to an embodiment of the present invention, help guidance is displayed so as to overlie an operation screen subjected to semi-transparent processing. The display technique allows a user to view the help guidance while viewing operation keys positioned in the background of the help guidance (or under the help guidance) at the same time. Thus, the correspondence between the operation keys and the help guidance can be clarified to improve user operability.

The semi-transparent operation screen improves the visibility of the help guidance.

### BRIEF DESCRIPTION OF THE DRAWINGS

Fig. 1 is an external view of a printing kiosk apparatus;
Fig. 2 is a block diagram showing an example internal structure of the printing kiosk apparatus;
Fig. 3 is a block diagram showing an example functional structure of a system control unit;
Figs. 4A and 4B are diagrams showing a change in a display screen by performing semi-transparent processing;
Fig. 5 is a diagram showing an example of the transition of the display screen when a user touches any portion of a touch panel during the display of an initial screen;
Fig. 6 is a diagram showing an example of the transition of the display screen when a user inserts an external storage medium into a slot without touching the screen during the display of the initial screen;
Fig. 7 is a diagram showing an example of the initial screen;
Fig. 8 is a diagram showing an example of a language-selection screen;
Fig. 9 is a diagram showing an example of a warning screen;
Fig. 10 is a diagram showing an example of a memory-card-insertion-guide screen;
Fig. 11 is a diagram showing an example of a menu-selection screen;
Fig. 12 is a diagram showing an example of a thumbnail-mode list-view screen;
Fig. 13 is a diagram showing an example of a preview-mode list-view screen;
Fig. 14 is a diagram showing an example of a screen in which help guidance is displayed;
Fig. 15 is a diagram showing another example of the screen in which the help guidance is displayed; and
Fig. 16 is a diagram showing another example of the screen in which the help guidance is displayed.

### DESCRIPTION OF THE PREFERRED EMBODIMENTS

A help-guidance display apparatus having a technique according to an embodiment of the present invention will be described.

Techniques well known or disclosed in the art are employed unless otherwise illustrated or described in the specification.

The following embodiment is one embodiment of the present invention, and the present invention is not limited thereto.

### Printing Kiosk Apparatus

A help-guidance display apparatus will be described in the context of a printing kiosk apparatus for business use.

The printing kiosk apparatus refers to a self-service printing apparatus capable of printing photographic images with high quality. The printing kiosk apparatus is installed in a place such as a store, a street, or a specific event site, and is provided for the use of any user. Generally, there is a large difference in skill levels between users.

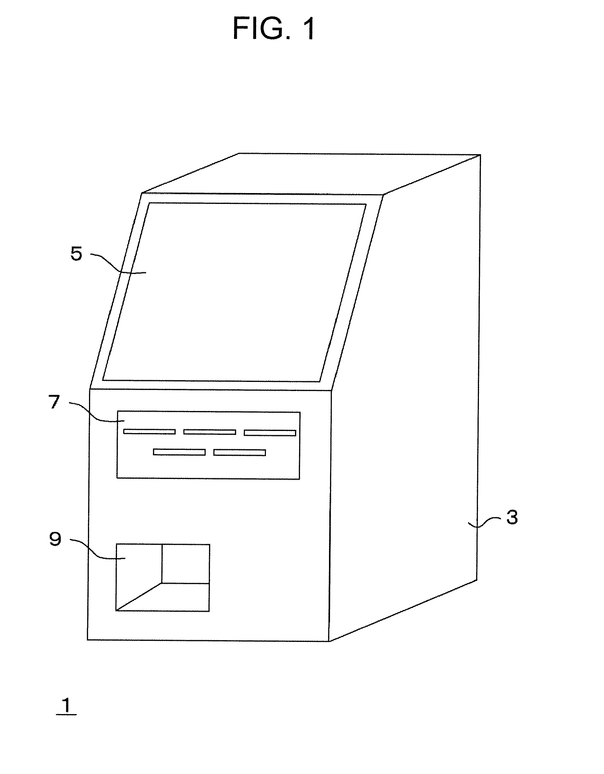

Fig. 1 is an external view of a printing kiosk apparatus 1. The printing kiosk apparatus 1 includes a box-shaped housing 3 having a built-in controller and printer.

The housing 3 has a touch panel screen 5 on an upper front part thereof. The touch panel screen 5 is configured so that a touch panel is mounted on a surface of a display screen.

The housing 3 also has insertion slots 7 in a front center part thereof for insertion of external storage media. The insertion slots 7 support a plurality of shapes or standards of portable storage media. The portable storage media include disc-type optical-read storage media, card-type or stick-type semiconductor storage devices, and magnetic storage media.

A photo output slot 9 is further disposed in a front lower part of the housing 3. A printed photo is taken out from the photo output slot 9. A user puts the hand in the photo output slot 9 to take a printed photo.

A coin insertion slot and coin return slot (not shown) are also disposed in the front part of the housing 3.

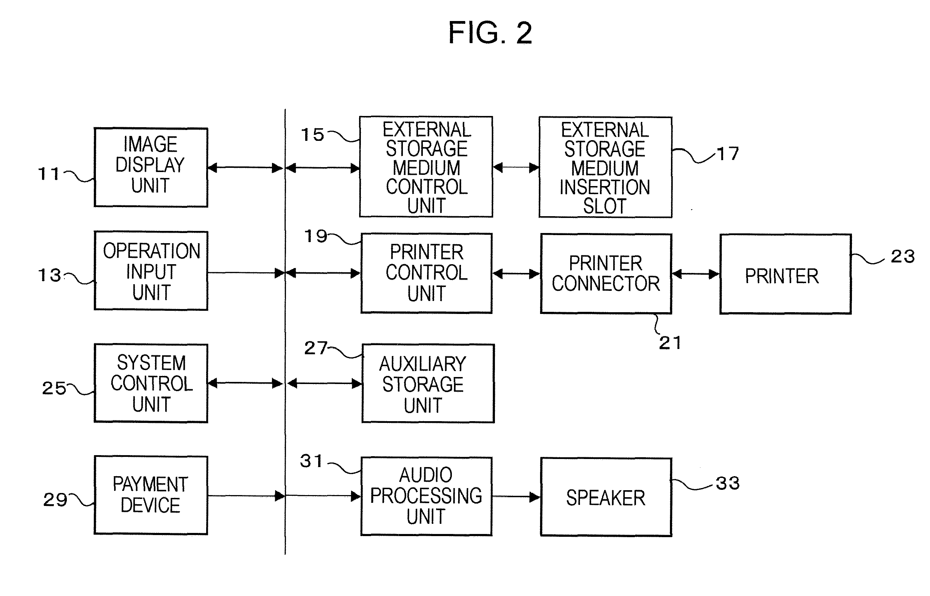

Fig. 2 shows an example internal structure of the printing kiosk apparatus 1. The printing kiosk apparatus 1 includes an image display unit 11, an operation input unit 13, an external storage medium control unit 15, an external storage medium insertion slot 17, a printer control unit 19, a printer connector 21, a printer 23, a system control unit 25, an auxiliary storage device 27, a payment device 29, an audio processing unit 31, and a speaker 33.

The image display unit 11 is a display device that displays an operation screen relating to photo printing or maintenance, and is formed of, for example, a cathode ray tube (CRT) display or a flat panel display. The operation screen to be displayed may be, for example, a screen for selecting an image to be printed, the number of output prints, and the output print size.

The operation input unit 13 is an input device that gives an instruction corresponding to a user's operation to the system control unit 25. In the embodiment, the operation input unit 13 is formed of a touch panel. Alternatively, the operation input unit 13 may be formed of a button, a switch, or a pointing device.

The external storage medium control unit 15 is a control device that controls an external storage medium inserted in the external storage medium insertion slot 17 (corresponding to one of the insertion slots 7 shown in Fig. 1). The external storage medium control unit 15 realizes a function to access a file system of the external storage medium to read a desired data file. The read image file is stored in the auxiliary storage device 27.

The printer control unit 19 is a control device that controls the printer 23 connected to the printer connector 21 to output image data. The printing kiosk apparatus 1 is typically provided with a plurality of printers 23 for individual sizes. The printer control unit 19 provides a function to output image data to a print queue corresponding to a size specified by the user. The print sizes are, for example, L size, KG size, 2L size, and panorama size.

The system control unit 25 is a control device that controls the overall system according to firmware, and is formed of, for example, a microprocessor. The system control unit 25 provides various control operations relating to a management function and a printing function (including a reception-screen display function and a help-guidance display function). The functional structure of the system control unit 25 is discussed below.

The auxiliary storage device 27 is a storage device used to store firmware, image data, advertising data, and other data. The auxiliary storage device 27 is formed of, for example, a hard disk device, which is a magnetic storage device.

The payment device 29 is a processing device and mechanism for carrying out payment for printing of photographic images.

The audio processing unit 31 is a signal processing device that provides a speech output for a description of operations or an advertisement. Speech or sound is output through the speaker 33.

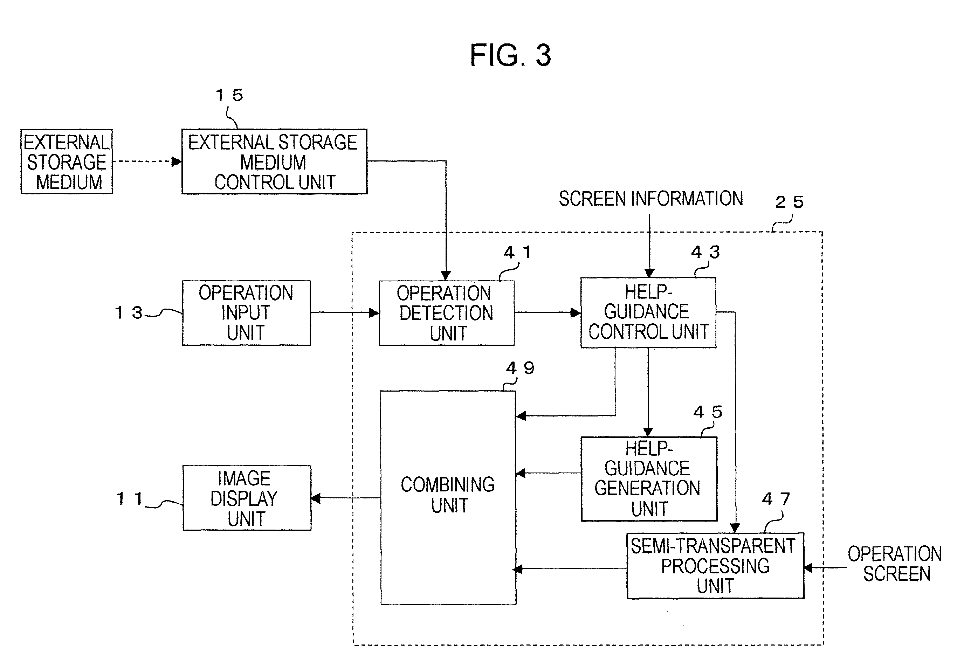

Fig. 3 shows an example functional structure of the system control unit 25. The functions of the system control unit 25 are implemented through firmware. In Fig. 3, elements relating to the help-guidance display function are illustrated.

The help-guidance display function is mainly realized by an operation detection unit 41, a help-guidance control unit 43, a help-guidance generation unit 45, a semi-transparent processing unit 47, and a combining unit 49.

The operation detection unit 41 is a processing unit (or an operation detection unit) that detects a user's operation of the external storage medium control unit 15 or the operation input unit 13. For example, the operation detection unit 41 detects an insertion of an external storage medium into one of the insertion slots 7. Further, for example, the operation detection unit 41 detects a selection and setting of a function via a GUI displayed on the image display unit 11.

The help-guidance control unit 43 is a processing unit that controls the display (output) of help guidance associated with the operation screen according to the detected operation and the screen information. The help-guidance control unit 43 instructs the help-guidance generation unit 45 to generate help guidance according to the operation screen. The help-guidance control unit 43 further instructs the semi-transparent processing unit 47 to execute semi-transparent processing.

The help-guidance generation unit 45 is a processing unit that generates a help-guidance display image to be displayed on the image display unit 11. The help-guidance display is provided by a user's operation or is automatically provided according to the help-guidance control unit 43. The automatic help-guidance display is performed, for example, when no input is detected for a prescribed period of time or longer after the previous operation.

The semi-transparent processing unit 47 is a processing unit that performs processing (semi-transparent processing) for reducing the brightness of the overall operation screen when displaying help guidance.

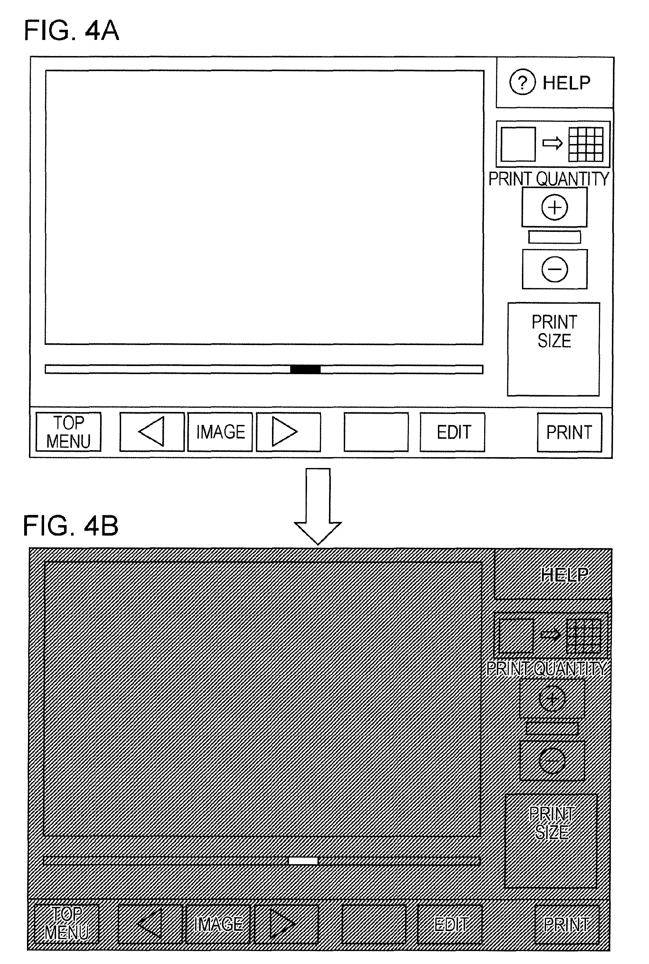

Figs. 4A and 4B show an example of transparent processing. Fig. 4A shows an example of an original operation screen that is not subjected to the transparent processing, and Fig. 4B shows an example of an operation screen that is subjected to the transparent processing. In the operation screen subjected to the transparent processing, the layout of the operation keys and the other elements remains as they are in the original operation screen. Thus, the user can understand the contents and position of the operation keys in a manner similar to those on the original operation screen.

The combining unit 49 is a processing unit that displays the help-guidance display image on the top of the semi-transparent operation screen.

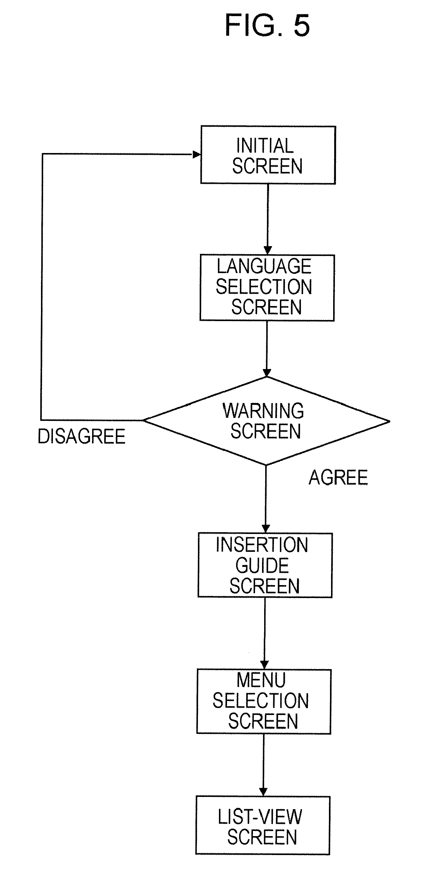

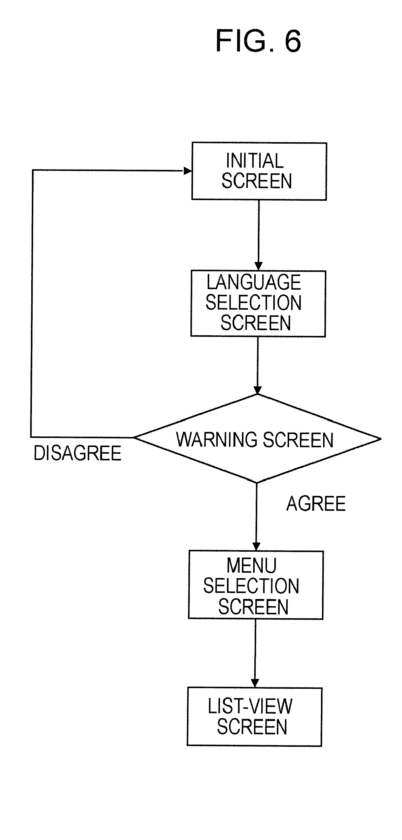

An example of the display of the operation screen used in the printing kiosk apparatus 1 will be described. Figs. 5 and 6 show examples of the transition of the operation screen. In Fig. 5, the user touches any portion of the touch panel during the display of an initial screen. In Fig. 6, the user inserts an external storage medium into one of the slots 7 without touching the screen during the display of the initial screen. The difference between Figs. 5 and 6 is whether or not a guide screen for prompting the user to insert an external storage medium is displayed. The following description will be given with reference to Fig. 5.

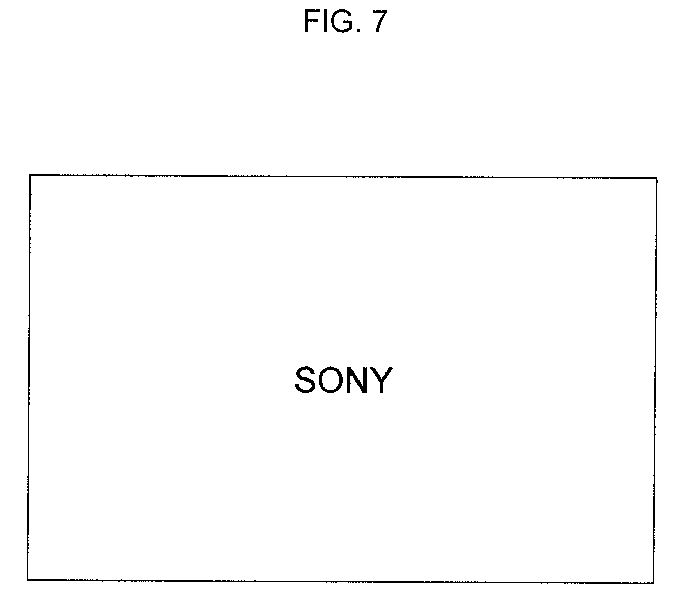

Fig. 7 shows an example of the initial screen. The initial screen may be a standby screen that is initially displayed after the power supply is turned on or a standby-mode screen that is displayed after the end of the previous use. It is to be noted that the title shown in Fig. 7 is a registered trademark.

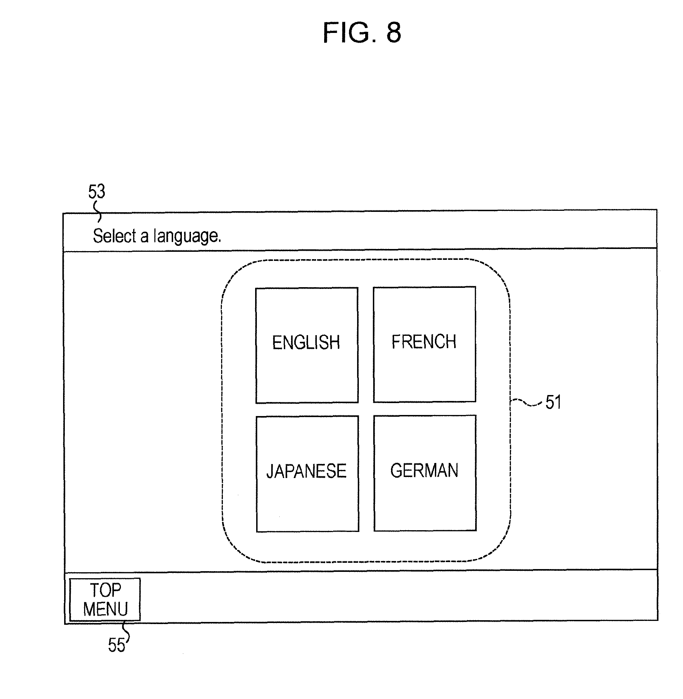

When the user touches any portion of the touch panel screen, a language-selection screen shown in Fig. 8 is displayed. The language-selection screen includes a plurality of keys 51 representing languages, and a guidance message 53, namely, "Select a language."

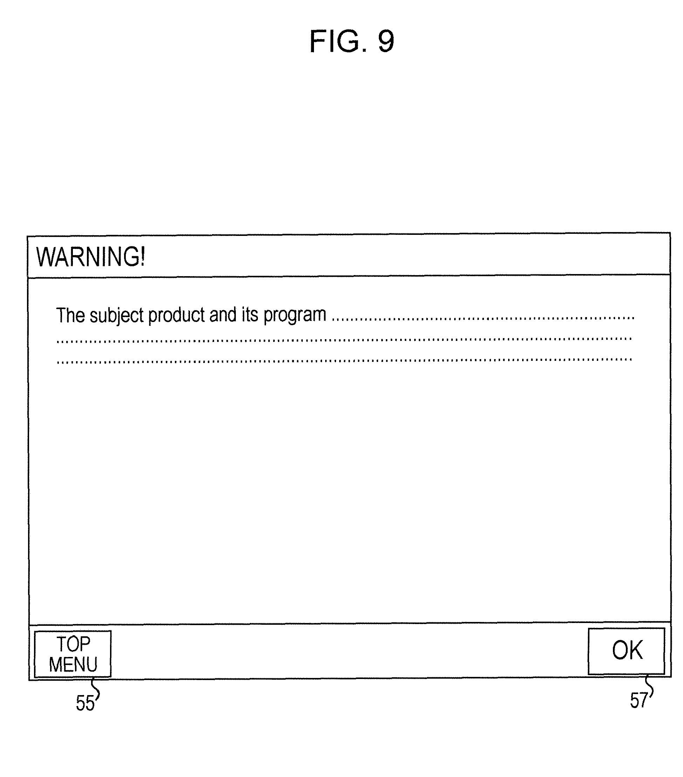

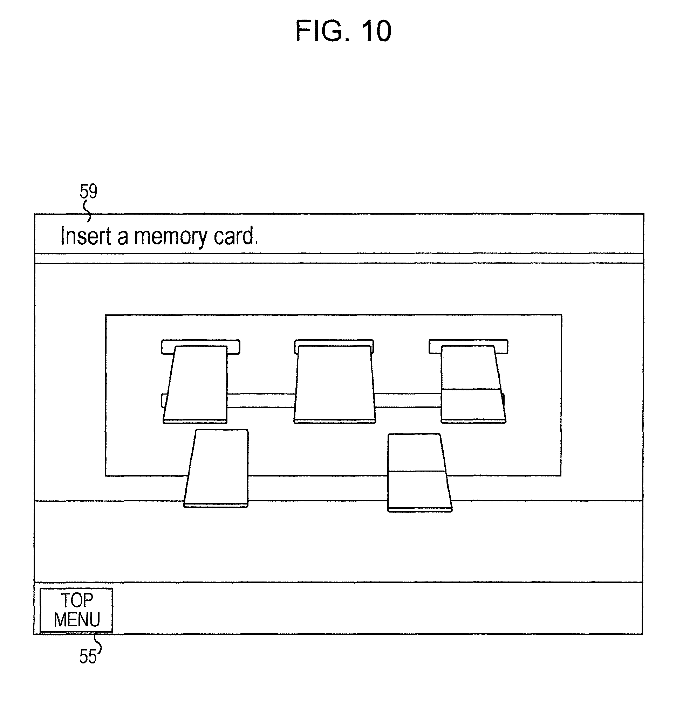

When the user touches one of the keys 51 to select a language, a warning screen shown in Fig. 9 is displayed. When the user touches an OK key 57 on the warning screen and agrees with the contents of the warning, a memory-card-insertion-guide screen shown in Fig. 10 is displayed on the touch panel screen.

When the user touches a "top menu" key 55 in the lower left corner of the warning screen shown in Fig. 9 and does not agree with the contents of the warning displayed on the warning screen, the touch panel screen returns to the initial screen shown in Fig. 7.

When the memory-card-insertion-guide screen shown in Fig. 10 is displayed, shot images in a plurality of memory cards and a guidance message 59, namely, "Insert a memory card", are displayed.

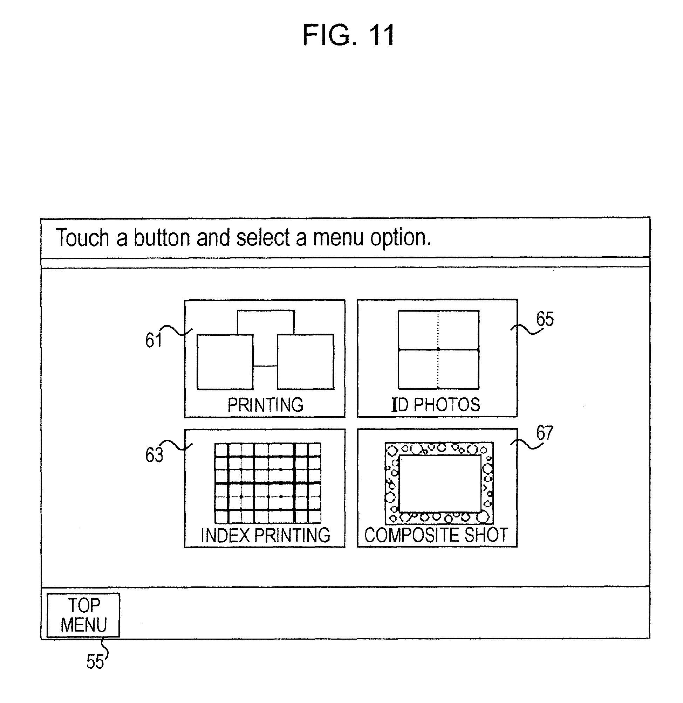

In the memory-card-insertion-guide screen shown in Fig. 9, when the user inserts a memory card into the corresponding memory-card slot of the slots 7, the screen changes to a menu-selection screen shown in Fig. 11.

The menu-selection screen includes a plurality of menu keys associated with various print menus, such as a "printing" menu key 61 for printing a selected image, an "index printing" menu key 63 for printing an index list, a "split printing" menu key 65 for split printing for ID photos, and a "border printing" menu key 67 for printing a composite shot with a template.

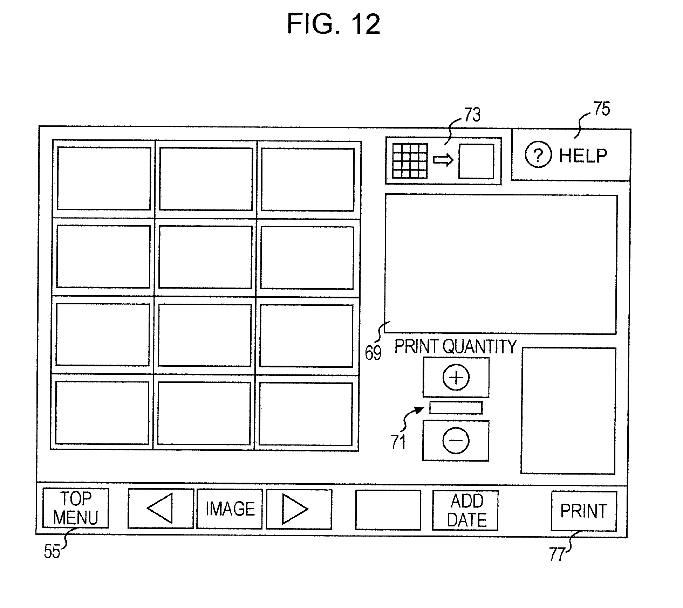

Here, the user operates the "printing" menu key 61. In this case, the screen changes to a list-view screen shown in Fig. 12.

In the list-view screen, shot images read from the memory card are displayed in a thumbnail mode. A plurality of operation keys are also displayed on the screen. When the user selects any of the thumbnail images by touching it, the selected image is displayed in an enlarged manner in an enlarged-view display area 69 in the upper right portion of the screen. The character "1" is also displayed in a number-of-prints-ordered field 71. Thus, the user understands the acceptance of the printing order.

The list-view screen may also be presented in a preview mode that allows the user to confirm the shot images read from the memory card one-by-one. The display mode can be changed by, for example, operating a display-mode change key 73.

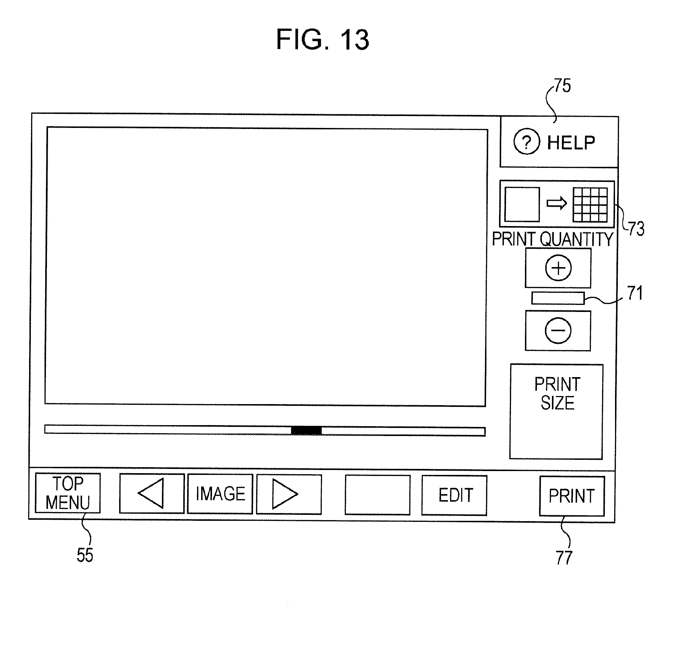

Fig. 13 shows an example of the display of a preview screen. The display-mode change key 73 for changing the display mode is also provided in the preview screen.

In the list-view screen, a help key 75 and a print key 77 are displayed on the upper right corner and the lower right corner of the screen, respectively, irrespective of the display mode.

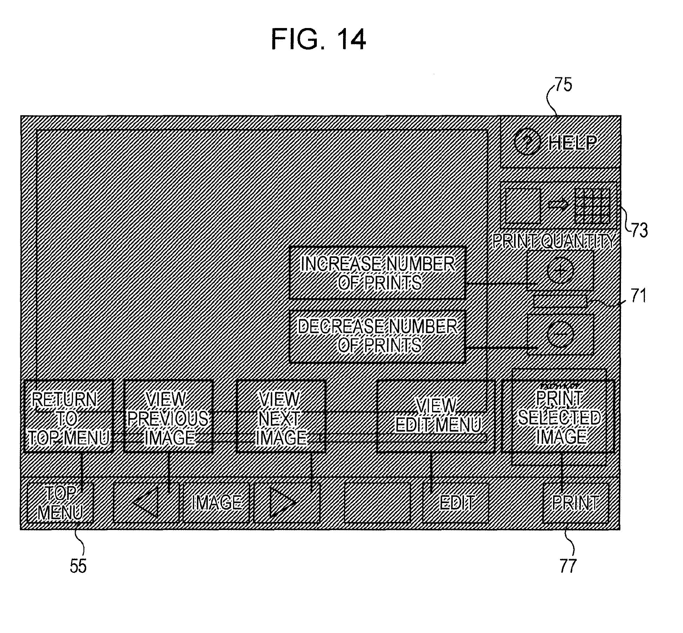

The help key 75 is a key for displaying help guidance on the screen for describing the keys displayed on the screen at a timing desired by the user. Fig. 14 shows an example of the display of the help guidance. The help-guidance display shown in Fig. 14 is provided when the help key 75 is operated during the display of the preview screen.

Help-guidance messages associated with the operation keys are displayed so as to overlie the preview screen subjected to the semi-transparent processing. In the example shown in Fig. 14, the help-guidance messages are displayed in pop-up windows so as to help understand the correspondence with the operation keys on the preview screen subjected to the semi-transparent processing. Specifically, lead lines are used to associate the help-guidance messages and the operation keys, and the help-guidance messages are displayed in the vicinity of the corresponding operation keys.

Since the help-guidance messages are displayed without changing the key layout and the key-top characters of the operation keys, a user unfamiliar with operations can clarify the correspondence between the help-guidance messages and the operation keys.

In Fig. 14, a plurality of help-guidance messages are displayed at the same time in association with a plurality of operation keys.

Since the plurality of help-guidance messages are displayed at the same time in association with the plurality of operation keys available on the screen, the user can recognize the information on the plurality of operation keys at a time without operating the help key 75 a plurality of times.

In the embodiment, each time any of the operation keys is operated, the display returns to the previous operation screen. This function eliminates the need for the user to perform an operation to cancel the help guidance display.

The help-guidance messages shown in Fig. 14 will be described.

A help-guidance message associated with an "edit" key indicates that the "edit" key is used to display an edit menu.

A help-guidance message associated with a "+" key indicates that the "+" key is used to increase the number of prints. A help-guidance message associated with a "-" key indicates that the "-" key is used to decrease the number of prints.

A help-guidance message associated with the "print" key 77 indicates that the "print" key 77 is used to give an instruction to print a selected image. By operating the "print" key 77, a printing order is placed and payment processing for the printing order is performed.

A help-guidance message associated with the "top menu" key 55 indicates that the display returns to the top menu.

A help-guidance message associated with a left-pointing triangle key indicates that the left-pointing triangle key is used to display the previous image in a preview area located at the center of the screen. A help-guidance message associated with a right-pointing triangle key indicates that the right-pointing triangle key is used to display the subsequent image in the preview area at the center of the screen.

The operation screen further includes other operation keys, such as a stop key used to stop the printing operation, a print-scale key used to set a print scale, and an image-modification key used to adjust the brightness, color cone, sharpness, etc., of the image, as necessary.

Although help-guidance messages associated with those operation keys are not shown in Fig. 14 due to the limited display space, the help-guidance messages can also be displayed in a similar manner to that shown in Fig. 14. For example, by operating the help key 75 once more, the help-guidance messages associated with the stop key and the other operation keys are displayed at a time.

The advantages of the application to a printing kiosk apparatus will be described.

The above-described functions are provided in a printing kiosk apparatus placed at a public space such as an office or a street so as to be used by a variety of users, thus allowing users unfamiliar with the operation key types or operation key search to recognize a desired operation key at a glance.

Thus, a printing kiosk apparatus that is user-friendly regardless of the skill levels of users can be realized. For example, the time needed for a user unfamiliar with operations can be reduced. As a result, the availability rate of the printing kiosk apparatus operated by users of different skill levels can be increased.

Because of an increase in operability of the printing kiosk apparatus, the number of new users will increase, and more demands are expected.

### Other Embodiments

In the above-described embodiment, help-guidance display windows are transparent. In this case, the operation screen subjected to transparent processing is displayed so as to appear within the help-guidance display windows.

In some cases, however, it is difficult to recognize the contents of the help guidance. For example, when the operation screen positioned in the background of help-guidance messages has a fine pattern or when characters overlap, it is difficult to read the help-guidance messages.

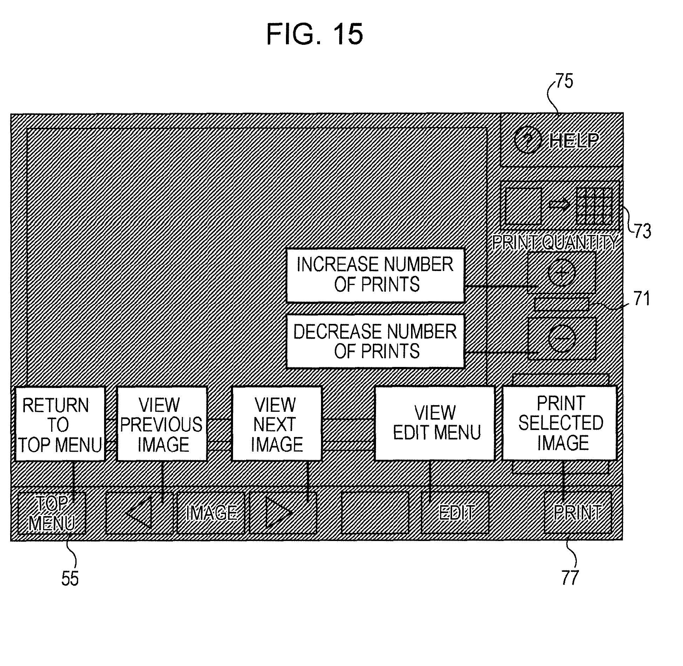

In such cases, for example, a display method shown in Fig. 15 is recommended. In Fig. 15, help-guidance display windows are displayed in a non-transparent fashion. The display method shown in Fig. 15 allows clear separation of the operation screen subjected to the semi-transparent processing and the help-guidance display areas. Thus, the user can easily identify the contents of the help guidance.

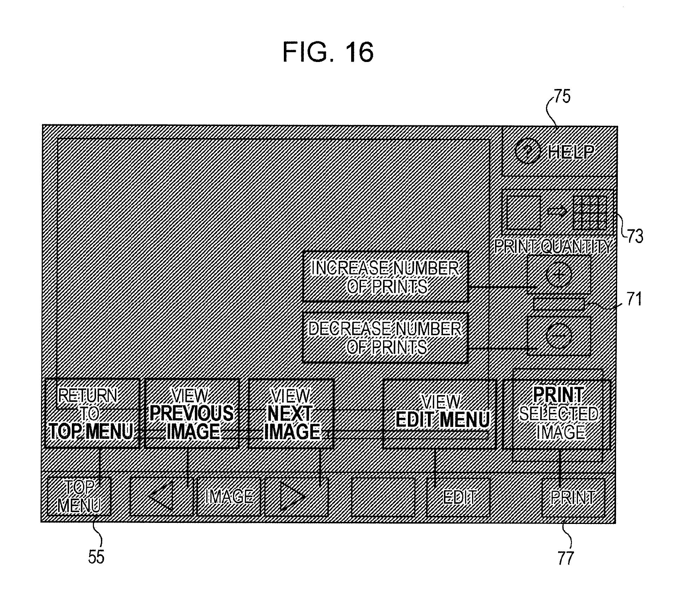

Another recommended display method is shown in Fig. 16. In Fig. 16, help-guidance display windows are displayed in a transparent fashion. In the display method shown in Fig. 16, however, the font size of an important word in each help-guidance message is larger than that of the other words.

For example, in the help-guidance message associated with the "top menu" key 55, the word "top menu" is displayed with a larger font size. In the example shown in Fig. 16, furthermore, in the help-guidance messages associated with the operation keys used to switch an image to be displayed on the preview screen, the words "previous image" and the "next image" are displayed with a larger font size. The words "edit menu" and "print" are also displayed with a larger font size in association with the "edit" key and the "print" key 77.

The display method shown in Fig. 16 allows the user to easily identify the contents of the help guidance.

In the example shown in Fig. 16, in addition to the increased font size, the font of the important words is changed to a bold font.

That is, in the example shown in Fig. 16, the important words are displayed with a larger font size as well as in a bold font.

However, the help-guidance display methods are not limited to those described above. The important words may be displayed either with a larger font size or in a bold font.

Alternatively, an important word and other words in help guidance may be displayed with a larger font size and in a bold font in order to easily identify the help guidance.

The present inventors further recommend a display method in which help guidance is displayed in a color tone different from that of the operation screen subjected to the semi-transparent processing. The larger the difference in color tone, the higher the visibility of the help guidance, resulting in more user-friendly display.

The display method for changing the color tone of the font may be used only for important words in the help guidance. This display method may be used in combination with the above-described large and bold font display method or any other display method.

A combination of the display methods makes it easier to identify the contents of the help guidance.

In the above-described embodiment, help-guidance messages are displayed using lead lines in the vicinity of operation keys.

However, the positions of the help-guidance messages are not limited thereto. For example, help-guidance messages may be positioned so as to overlap the associated operation keys. In this case, the help-guidance messages may be displayed without using lead lines.

In the above-described embodiment, help-guidance messages are displayed at the same time on one screen in association with some of a plurality of operation keys forming an operation screen.

The operation keys associated with the displayed help-guidance messages may be selected as operation keys with high priority or high frequency of use.

For example, help-guidance messages associated with operation keys with high priority, which are operation keys necessary for the operation input, may be displayed at the same time on one screen, thus allowing a user unfamiliar with the operation input to perform a minimum operation.

For example, help-guidance messages associated with operation keys with high frequency of use may be displayed at the same time on one screen, thus allowing a user unfamiliar with operations to perform an ordinary operation on the operation screen. The operation keys with high priority and the operation keys with high frequency of use may be the same.

In the above-described embodiment, help-guidance messages associated with a plurality of operation keys are displayed at the same time on one screen.

However, only a help-guidance message associated with an operation key specified by a pointer on the operation screen may be displayed on the screen.

In the above-described embodiment, operation keys can be operated in a state where the help guidance is displayed.

However, operation keys may be operated only when the display of the help guidance is cancelled.

In the above-described embodiment, the display of help guidance is automatically cancelled when operation keys are operated in a state where the help guidance is displayed.

However, the display of the help guidance may be cancelled by a separate operation.

In the above-described embodiment, help-guidance messages are displayed in association with operation keys.

However, the above-described methods may also be used when a help-guidance message for the overall operation screen is displayed.

In the above-described embodiment, the overall operation screen is subjected to the transparent processing when displaying help guidance.

However, only a portion of the operation screen corresponding to help-guidance display windows may be selectively subjected to the transparent processing.

While a help-guidance display apparatus has been described in the context of a printing kiosk apparatus, the help-guidance display apparatus may be used for an information processing apparatus for personal use and an information processing apparatus for business use having a help-guidance display function.

The help-guidance display apparatus may be used for data terminals for business use, point-of-sale (POS) terminals, cash dispensers, automatic vending machines, and audio and video editors.

For example, the help-guidance display apparatus may also be use for personal-use electric appliances.

Examples of such electric appliances include computers, printers, video cameras, digital cameras, game machines, scanners, portable information terminals (such as palmtop computers, mobile phones, portable game consoles, and electronic books), timepieces, image players (such as optical disk apparatuses and home servers), monitors, television receivers, and processing boards and processing cards having the function according to an embodiment of the present invention.

For example, the help-guidance display apparatus may also be used for an operation system and various types of application software operating on the operation system. The application software includes so-called office software and installer.

The above-described embodiment provides a printing kiosk apparatus serving as a fixed information processing apparatus that is installed at a store or another place.

However, the help-guidance display function described with respect to the embodiment can also be provided in a portable information apparatus.

The help-guidance display program described with respect to the foregoing embodiment may be stored in a storage medium and distributed. Examples of the storage medium include a magnetic storage medium, an optical storage medium, and a semiconductor storage medium.

A variety of modifications may be made to the above-described embodiment without departing from the scope of the present invention. Further, a variety of modifications and applications are conceivable from the specification.

It should be understood by those skilled in the art that various modifications, combinations, sub-combinations and alterations may occur depending on design requirements and other factors insofar as they are within the scope of the appended claims or the equivalents thereof.

## Claims

1. A help-guidance display method comprising the steps of:
performing semi-transparent display processing on an operation screen when displaying help guidance in association with the operation screen or an operation key; and
displaying the help guidance so that the help guidance overlies the operation screen subjected to the semi-transparent display processing.

2. The help-guidance display method according to Claim 1, wherein a display window of the help guidance is displayed in a non-transparent manner.

3. The help-guidance display method according to Claim 1, wherein the help guidance is displayed in a color tone different from the color tone of the operation screen subjected to the semi-transparent display processing.

4. The help-guidance display method according to anyone of Claims 1 to 3, wherein the help guidance is displayed in association with only an operation key with high priority among a plurality of operation keys constituting the operation screen subjected to the semi-transparent display processing.

5. The help-guidance display method according to anyone of Claims 1 to 3, wherein the help guidance is displayed in association with only an operation key with high frequency of use among a plurality of operation keys constituting the operation screen subjected to the semi-transparent display processing.

6. The help-guidance display method according to anyone of Claims 1 to 3, wherein operation keys constituting the operation screen subjected to the semi-transparent display processing can be operated while the help guidance is displayed overlying the operation screen.

7. A help-guidance display apparatus comprising:
a semi-transparent processing unit (47) that performs semi-transparent display processing on an operation screen when displaying help guidance in association with the operation screen or an operation key; and
a combining unit (49) that displays the help guidance so that the help guidance overlies the operation screen subjected to the semi-transparent display processing.

8. An information processing apparatus comprising:
a display control unit that displays an operation screen on a display device;
an operation detection unit (41) that detects an operation of operation keys constituting the operation screen;
a semi-transparent processing unit (47) that performs semi-transparent display processing on the operation screen when displaying help guidance in association with the operation screen or the operation keys; and
a combining unit (49) that displays the help guidance so that the help guidance overlies the operation screen subjected to the semi-transparent display processing.

9. A printing kiosk apparatus comprising:
a display unit (11);
a display control unit that displays an operation screen on the display unit;
an operation detection unit (41) that detects an operation of operation keys constituting the operation screen;
a semi-transparent processing unit (47) that performs semi-transparent display processing on the operation screen when displaying help guidance in association with the operation screen or the operation keys; and
a combining unit (49) that displays the help guidance so that the help guidance overlies the operation screen subjected to the semi-transparent display processing.

10. A program causing a computer to execute the steps of:
performing semi-transparent display processing on an operation screen when displaying help guidance in association with the operation screen or an operation key; and
displaying the help guidance so that the help guidance overlies the operation screen subjected to the semi-transparent display processing.
